Europäisches Patentamt

European Patent Office

Office européen des brevets

(19)

(11) Publication number: **0 113 195**
**A1**

# (12) EUROPEAN PATENT APPLICATION

(21) Application number: **83307320.8**

(22) Date of filing: **01.12.83**

(51) Int. Cl.³: **H 02 G 9/06**

(30) Priority: **01.12.82 GB 8234186**
**21.12.82 GB 8236308**

(43) Date of publication of application:
**11.07.84 Bulletin 84/28**

(84) Designated Contracting States:
**BE CH DE FR GB IT LI NL**

(71) Applicant: **UNIVERSITY COLLEGE CARDIFF**
**CONSULTANTS LTD.**
**P.O. Box 78**
**Cardiff, CF1 1XL(GB)**

(72) Inventor: **Jarvis, Clifford**
**54 Seymour Street Aberdare**
**Mid. Glamorgan Wales(GB)**

(74) Representative: **Hartley, David**
**c/o Withers & Rogers 4 Dyer's Buildings Holborn**
**London, EC1N 2JT(GB)**

(54) **Improved cable laying systems and kerbstones and gutterstones suitable therefor.**

(57) In a system of service cables the cables are laid in longitudinal passages provided by kerbstones or gutterstones, branch cables being laid in lateral passages. The passages may be provided by recesses or internal passages in the stones. Special purpose kerbstones may be multipart or may provide access to the passage by a removable cover.

EP 0 113 195 A1

Access
Unit **2**

Standard
Unit **1**

Inspection
Unit  **3**

Pavement level

Road level

*Elevation*

Pavement

**Junction**

Road

*Plan*

Lifting lugs

Fig. I

## IMPROVED CABLE LAYING SYSTEMS AND KERBSTONES AND GUTTERSTONES SUITABLE THEREFOR.

This invention relates to new cable laying systems and to new kerbstones and gutterstones for use in such systems.

At present it is the practice to lay service cables, such as power and telephone cables in conduits buried in the road way or in the adjacent foot path. Consequently, when repairs or connections to the cable are made the roadway or footpath has to be dug up to gain access to the cable. This is an expensive and highly inconvenient procedure which will give rise to even more expense and inconvenience with the widespread introduction of new communication systems based on service cables such as high frequency and optical fibre cables.

According to the present invention we provide an underground service cable system in which a main cable is laid in a continuous longitudinal passage in kerbstones or gutterstones and, at appropriate points, a kerbstone and, if the passage is in the gutterstones, the adjacent gutterstone is provided with a lateral passage opening at one end in the longitudinal passage and, at the other end, in the rear wall of the kerbstone, the lateral passage containing a branch cable connected to the main cable to provide local services.   The lateral passage may lead into a conduit in which the branch cable is laid.

The longitudinal passage in the kerbstones or gutterstones may be provided by a longitudinal recess in the base of the stones, the walls of the passage being completed by the foundation, usually of concrete, on which the stones are laid.   Alternatively, the passage provided by the stones is internal.   Preferably, however, the passage is provided in a multi-part kerbstone.   Such a kerbstone may comprise a base part and a superimposed part, the passage being provided by a longitudinal recess in one or both of the adjacent walls of the two parts.   The superimposed part may be the upper part of the kerbstone, i.e. the kerbstone may be two-part, or the superimposed part may be a cap for a recess in the lower part, the cap itself being surmounted by the upper part of the kerbstone i.e. the kerbstone may be three-part.   Alternatively, the passage may be provided by a longitudinal recess in the front wall of the kerbstone, the recess being sealed by a removable cover.   The cover may be of plastic.

Such stones positioned end to end provide a continuous passage for the service cable and may be used as a standard unit providing the major part of the system. They may be located and held in place in the same manner as are present conventional kerbstones.

In a further preferred form of such kerbstones two or more passages are provided side-by-side. This is advantageous in systems in which two or more different types of cable are laid in the system e.g. a high voltage power cable and a communication cable.

Interspersed at appropriate points between such standard kerbstones are special-purpose kerbstones. One such special-purpose kerbstone provides a lateral passage from a longitudinal passage in the kerbstone or in an adjacent gutterstone to the rear wall of the kerbstone in which a branch cable e.g. to a consumer point is laid, the connection between the branch cable and the main cable being made in the longitudinal passage which preferably is wider at that point. Conveniently, the upper part of such a special-purpose kerbstone, and any intermediate cap if provided, can be lifted to provide access to, or for making, the connection. The upper part of the kerbstone may be provided with recesses or lugs in or under which lifting means may be inserted. Similarly, recesses or lugs may be provided in the upper part of the kerbstones used as standard units of the system, such recesses or lugs being for use in the event that the passage provided by the standard units has to be opened up.

Another type of special-purpose kerbstone which may be interspersed between standard kerbstones and which can be opened up as just described, contains no lateral passage, but may have an enlarged longitudinal passage, this kerbstone being used for access to the system e.g. for inspection or rodding, or for acting as a keystone for easing removal of standard units.

Conveniently, both these special-purpose units may be made to the same basic design, the lateral channel in the connection type being provided by knocking out a thin-wall portion of the rear wall of the kerbstone. With the previously described kerbstone having a covered recess in the front wall, connection to the main cable may be made through a lateral passage to the rear wall.

It is known to make hollow multi-part kerbstones for use as kerb gulley units, the kerbstones providing an internal gulley into which surface water from the adjacent roadway may enter through apertures in the front wall of the kerbstone.

A fundamental difference between these known kerbstones and those provided by the present invention is that the former necessarily have lateral passages between the internal gulley and the upper part of the front wall of the kerbstone which will be exposed when the kerbstone is in use. On the other hand, in the kerbstones of the present invention there must be no such lateral passage which, when the kerbstone is in use, is exposed for entry of surface water. In one embodiment, i.e. a kerbstone for use in conjunction with a gulleystone which provides the longitudinal passage, a lateral passage may extend from the rear wall to the front wall of the kerbstone but in that case the lateral passage is in the lower part of the kerbstone so that the aperture in the front wall is not exposed when the kerbstone is in use but is aligned with a lateral passage in the gulleystone.

The invention may be illustrated with reference to the accompanying drawings in which:

Fig.1   is a diagrammatic view of part of a cable system, and

Figs.2 -10 show various designs of kerbstones and gutterstones which may be used in a cable system.

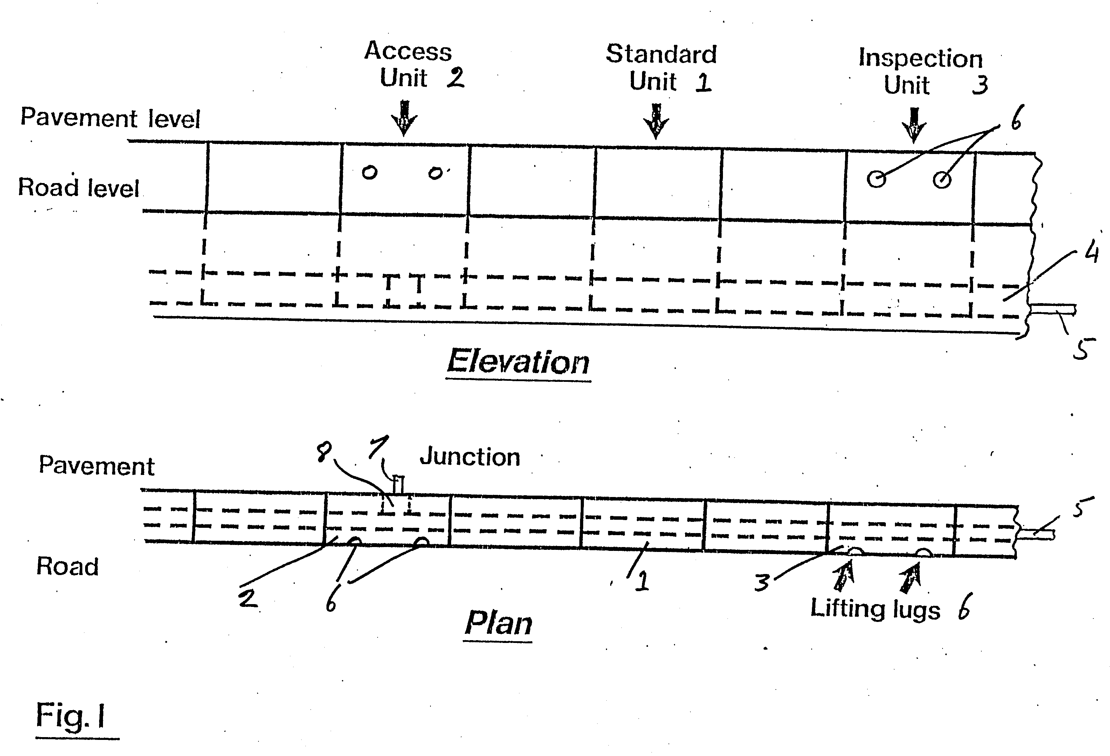

In Fig.1, the kerb between road and pavement is made up of various types of kerbstones, the majority of which are "standard unit" kerbstones 1 interspersed with "access unit" kerbstones 2 and "inspection unit" kerbstones 3. The kerbstones provide a longitudinal passage 4 in which runs a main cable 5. In the exposed part of kerbstones 2 and 3 lifting lugs 6 are provided by means of which the upper part of the kerbstone may be lifted to expose the cable 5, the upper part being replaceable when work on, or inspection of, the cable has been completed. Kerbstones 1 may also be provided with lifting lugs.

In kerbstones 2 and 3 the passage 4 may be widened to facilitate location of a joint to a branch cable or introduction of rods. As indicated in the Plan of Fig.1 a branch cable 7 is connected to the main cable 5 in kerbstone 2, this branch cable emerging at the rear wall of the kerbstone from lateral passage 8 which connects with the longitudinal passage 4.

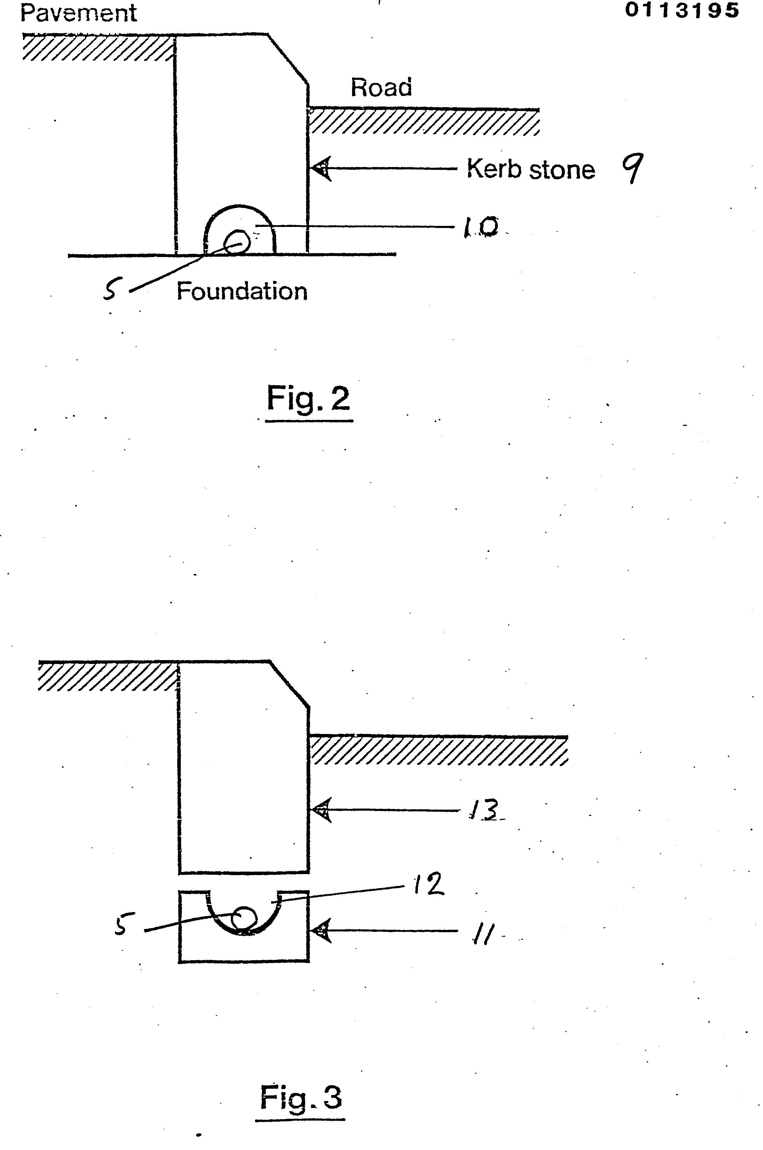

In Fig.2 is shown in section the simplest form of kerbstone which can provide a "standard unit" for the system. In this Figure the kerbstone 9 has a longitudinal recess 10 in the base and when the kerbstone is laid on a foundation, a longitudinal passage for a cable 5 is provided.

In Fig.3 is shown in section a two-part kerbstone which consists of a lower part 11 having a longitudinal recess 12 and an upper part 13. When upper part 13 is positioned on lower part 11, a longitudinal passage for a cable 5 is provided. Lugs may be provided on the base of upper part 13, these lugs projecting into recess 12 to positively locate the upper part 13 on the lower part 11. This type of kerbstone also may be used as a "standard unit".

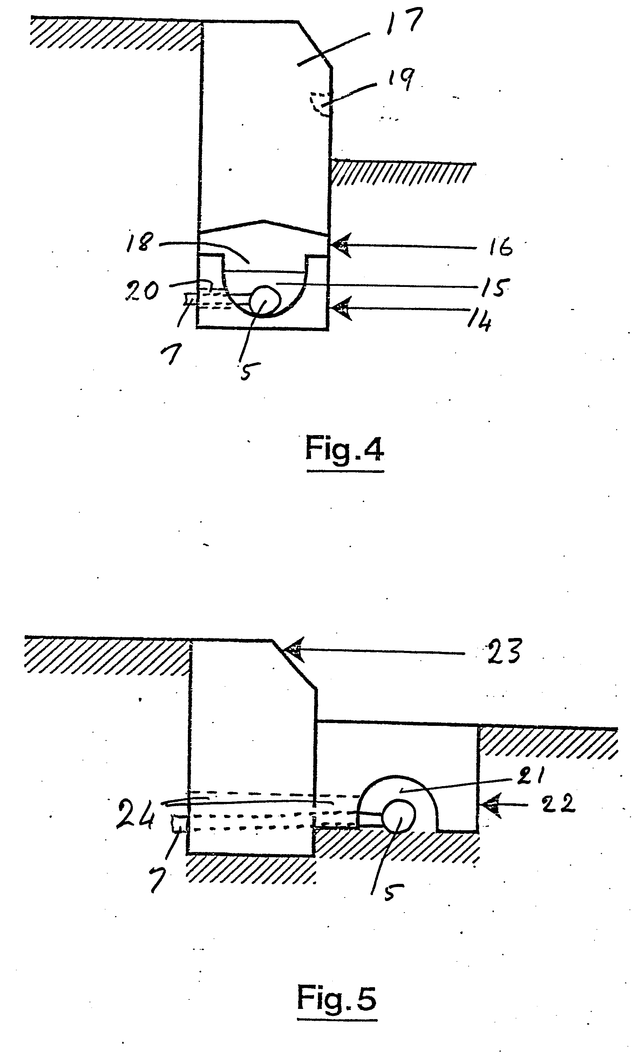

Fig. 4 shows in section a three-part kerbstone consisting of a lower part 14 having a longitudinal recess 15, a cap 16 which together with lower part 14 provides a longitudinal passage for a cable 5, and an upper part 17.   The cap has on its lower face a projection 18 which locks it in place on the lower part 14 and the upper face of the cap is ridge-shaped to facilitate location of the upper part 17 on it. This type of kerbstone may also be used as an inspection unit, when it is provided with lifting lugs 19, and also as an "access unit" when it is further provided with a lateral passage 20  for a branch cable 7.

Fig. 5 shows an alternative arrangement in which the longitudinal passage for a main cable 5 is provided by a longitudinal recess 21 in a gutterstone 22 (shown in section).  This gutterstone is used in conjunction with a kerbstone 23.    The major part of the longitudinal passage of a cable system may be provided in this way.   At connections to branch cables, the appropriate gutterstones and kerbstones are provided with aligned cut-out portions 24 (indicated by the dotted line) through which the branch cable 7 passes.

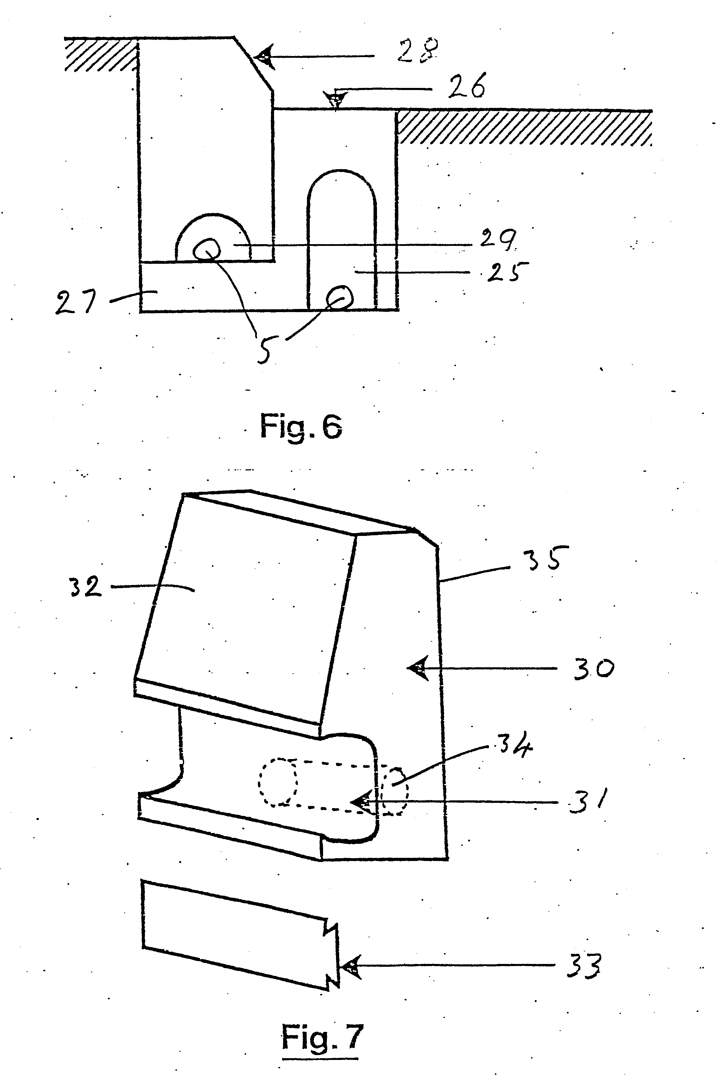

Fig. 6 shows an arrangement suitable for two main cables 5 which are carried in two separate longitudinal passages. One passage for a cable 5 is provided by a longitudinal recess 25 in gutterstone 26. The gutterstone 26 has a lateral extension 27 which provides a base for a kerbstone 28. The kerbstone 28 has a longitudinal recess 29 in its base which, in conjunction with the lateral extension 27 of the gutterstone 26 provides a second longitudinal passage for a cable 5.

Fig.7 shows a kerbstone 30 in which a longitudinal passage is provided by longitudinal recess 31 in the front wall 32 of the kerbstone. The recess is closed and preferably sealed against ingress of water by a cover 33. When the kerbstone is in position, the cover may be located either just below or just above roadway level, the latter arrangement facilitating access to the cable. The kerbstone may be provided with a lateral passage 34 (shown in dotted outline) for a branch cable. Alternatively, the longitudinal recess may be in the rear wall 35 of the kerbstone, again closed by a cover 33. In this construction part of the cover may be removed to permit passage of a branch cable.

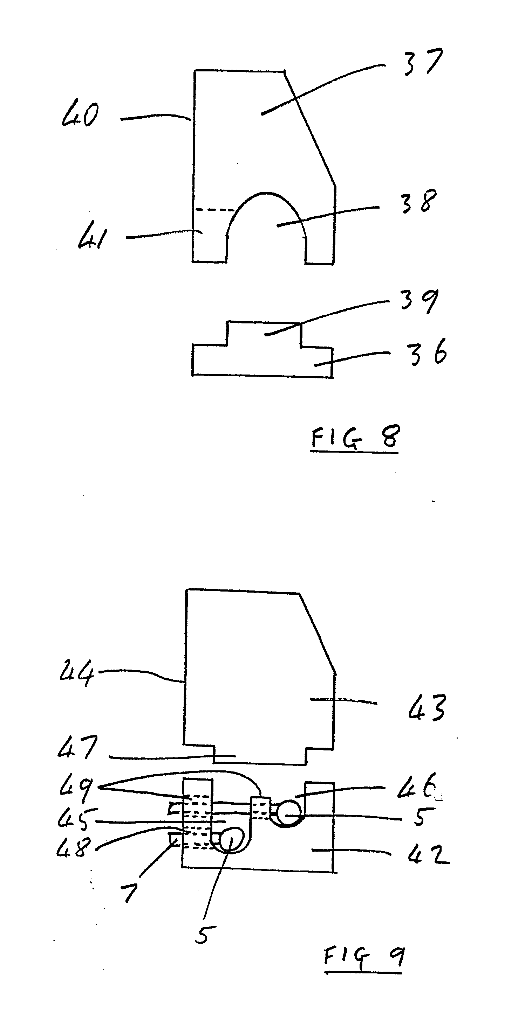

Fig. 8 shows (in section) a two-part kerbstone consisting of a base 36 and an upper part 37 which has a longitudinal recess 38. When the kerbstone is assembled, the recess is closed by projection 39 on the base 36 which also serves to locate the upper part on the base.    Where a branch connection is to be made, part of the rear wall 40 may be cut away at 41 as indicated by the dotted line to permit passage of a branch cable for connection with the main cable.

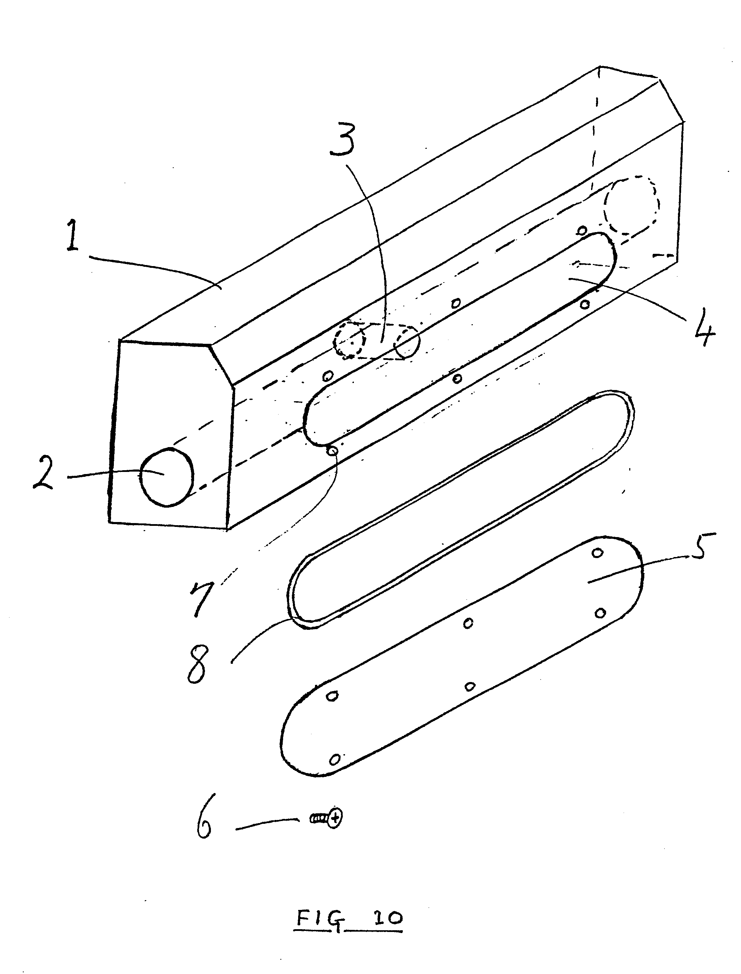

Fig. 9 shows in section a two-part kerbstone consisting of a base part 42 and an upper part 43.    Base part 42 has two longitudinal recesses, the one nearest the rear wall 44, recess 45, being deeper than the other recess 46.    A main cable 5 may be laid in each recess both of which are closed by projection 47 on the base of the upper part 43. Where branch cables 7 are to be located, a lower lateral passage 48 (shown in dotted outline) is provided between the lower longitudinal passage and the rear wall of the kerbstone, and/or an upper lateral passage 49 is provided between the upper longitudinal passage and the rear wall of the kerbstone. In this way, contact between the lower main cable and the branch cable to the upper main cable can be avoided. If desirable, insulation can be inserted between the upper branch cable and the lower main cable at this point.

In another embodiment of the invention, the kerbstone, which may be of any suitable exterior shape, is provided with a longitudinal passage open at each end of the kerbstone and a lateral passage extending from the longitudinal passage to the rear wall of the kerbstone, a portion of the longitudinal passage being open to the front wall of the kerbstone, the opening in the front wall normally being closed by a cover plate which is removably secured on the front wall of the kerbstone.

When such a kerbstone is incorporated in the improved cable laying system, access to the longitudinal passage for an operation such as rodding or making or inspecting a joint in the main cable to a branch cable laid in the lateral passage, may be obtained by removing the cover plate. After the operation, the cover plate is replaced and secured in place by bolts or clips.

The joint between the cover plate and the kerbstone is preferably watertight and this may be achieved by use of a suitable gasket or sealing compound.

The cover plate should be of material which will withstand the wear and tear of traffic and is suitably of galvanised steel or impact-resistant plastics material.

The length of the opening in the front wall of the kerbstone is such as to provide easy access in the operation to be carried out. In a kerbstone of normal length it is preferably at least half the length of the kerbstone, the limiting factor in the maximum length of the opening being that at each end of the opening it must still be possible to complete the joint between the cover plate and the front wall of the kerbstone.

A suitable kerbstone is illustrated in the accompanying Fig.10 in which a kerbstone 51 contains a longitudinal passage 52 and a lateral passage 53. The longitudinal passage opens into the front wall of the kerbstone at opening 54 which, in the kerbstone shown, extends over about $\frac{2}{3}$ the length of the kerbstone. The opening may be closed in watertight manner by means of a galvanised steel cover plate 55 which is secured to the kerbstone by bolts 56 which are to be screwed into threaded holes in metal inserts 57 embedded in the kerbstone. A gasket 58 of circular cross-section rubber is positioned between the cover plate and the front wall of the kerbstone to provide a watertight seal.

Conveniently, when the kerbstone is laid, a conduit for the branch cable may also be laid, this conduit running from the outer end of the lateral passage in the kerbstone to a service point. In such a system, a branch cable may be installed after the laying operation without any excavation being necessary. All that is required is that the cover plate is removed, the main cable is slightly displaced by bowing it outwardly through the opening so exposed, the branch cable is fed into the conduit and the end projecting from the lateral passage of the kerbstone is connected into the main cable. The connecting junction can then be positioned in the longitudinal passage opposite the end of the lateral passage and the cover plate replaced.

The longitudinal passage can be made wider at the junction with the lateral passage in order to accommodate the cable junction.

As an alternative to fixing the cover plate by means of threaded metal inserts in the kerbstone, the bolts may be secured into threaded holes in metal strips which are removably fitted across the width of the opening by engaging the ends of the strips in suitable recesses inside the opening.

All the kerbstones may be provided with lifting lugs or recesses, as shown in Fig.4, or other means, such as keyhole plates in the upper surface, to facilitate lifting the upper part to expose the longitudinal channel or channels.

CLAIMS:

1.          An underground service cable system in which a main cable is laid in a continuous longitudinal passage in kerbstones or gutterstones and, at appropriate points, a kerbstone and, if the passage is in the gutterstones, the adjacent gutter stone is provided with a lateral passage opening at one end in the longitudinal passage and, at the other end, in the rear wall of the kerbstone, the lateral passage containing a branch cable connected to the main cable to provide local services.

2.          A system as claimed in Claim 1 in which the branch cable is laid in a conduit leading from the end of the lateral passage in the rear wall of the kerbstone.

3.          For use in a system as claimed in Claim 1 or 2, a kerbstone or gutterstone having a longitudinal recess in the base.

4.          A kerbstone or gutterstone as claimed in Claim 3 having a lateral recess connecting the longitudinal recess to the rear wall of the stone.

5.        For use in a system as claimed in Claim 1 or 2, a kerbstone or gutterstone having an internal longitudinal passage.

6.        A kerbstone comprising a base part and a superimposed part and containing at least one internal longitudinal passage provided by at least one longitudinal recess in one or both parts where adjacent.

7.        A kerbstone as claimed in Claim 6 in which the superimposed part is a cap for a longitudinal recess in the base part, the cap being surmounted by an upper part of the kerbstone.

8.        A kerbstone having a longitudinal recess in its front face, the recess being closed by a removable cover.

9.        A kerbstone or gutterstone as claimed in Claim 6, 7 or 8 having a lateral passage connecting a longitudinal passage to the rear wall of the stone.

10.        A kerbstone as claimed in Claim 6 or 7 or Claim 9 as dependent on Claim 6 or 7 having recesses, lugs or other means for facilitating lifting of the superimposed or upper part.

11.　　　A kerbstone having an internal longitudinal passage and a lateral passage extending from the longitudinal passage to the rear wall of the kerbstone, a portion of the longitudinal passage being open to the front wall of the kerbstone, the opening in the front wall normally being closed by a cover plate removably secured on the front wall.

12.　　　A kerbstone as claimed in Claim 11 in which the longitudinal passage is wider in the region of the junction with the lateral passage.

Access
Unit 2

Standard
Unit 1

Inspection
Unit 3

6

Pavement level

Road level

4

5

## *Elevation*

8 1 Junction

Pavement

5

Road

2 6

3 1

Lifting lugs 6

## *Plan*

## Fig. I

Pavement

Road

Kerb stone  9

10

5   Foundation

## Fig. 2

13

12

5   11

## Fig. 3

0113195

Fig.4

Fig.5

0113195

28

26

29

25

27

5

## Fig. 6

32

35

30

34

31

33

## Fig. 7

FIG 8

FIG 9

FIG 10

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 086 572 (ROUTY DE CHARODON) *Page 2, lines 23-30; figures 1-3* | 1-7,9 | H 02 G 9/06 |
| X | FR-A-1 459 750 (E.D.F.) *Page 3, left-hand column, paragraphs 2-4; right-hand column, paragraphs 1-3; figures 6-12* | 1-7,9 | |
| X | US-A-3 712 187 (W.STELLING) *Column 3, lines 10-35; figures 3,6* | 1,2,5 | |
| A | FR-A- 354 118 (DONOHUE) *Page 1, lines 34-42; figures 1,2* | 1,8,11 | |
|  |  |  | TECHNICAL FIELDS SEARCHED (Int. Cl. ³) |
|  |  |  | H 02 G 9/00 E 01 C 11/00 E 03 B 1/00 E 01 F 9/00 |

The present search report has been drawn up for all claims

| Place of search | Date of completion of the search | Examiner |
|---|---|---|
| THE HAGUE | 07-03-1984 | LOMMEL A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82